# EUROPEAN PATENT SPECIFICATION

(11) **EP 0 395 566 B1**
(45) Date of publication and mention of the grant of the patent: **27.07.1994**
(21) Application number: 90500045.1
(22) Date of filing: 25.04.1990
(51) Int. Cl.: F16B 2/20, D06F 55/02

(54) **Double mouth clip**
Zweiseitige Klammer
Pince à double effet

(30) Priority: 26.04.1989 ES 8901334 U
(43) Date of publication of application: 31.10.1990
(73) Proprietor: Garcia Crespo, Agustin, E-39500 Cabezon de la Sal (Cantabria) (ES)
(72) Inventor: Garcia Crespo, Agustin, E-39500 Cabezon de la Sal (Cantabria) (ES)
(74) Representative: Garcia Cabrerizo, Francisco

(56) References cited:
- FR-A- 1 025 334
- FR-A- 1 127 231
- FR-A- 1 177 413
- FR-A- 1 331 461
- GB-A- 829 677

## Description

This invention relates to a double mouth clip.

FR-A-1 025 334 discloses a double-mouthed clip comprising the features as defined in the preamble of claim 1.

However, this known clip is very complicated in structure and necessitates in particular means such as a protrusion of a jaw part of the clip engaging into a cavity of the other jaw part to prevent an undesirable relative movement of the two jaw parts.

The invention has for purpose to eliminate the above drawbacks of the known clip by proposing a double-mouthed clip for holding a workpiece having a simple structure allowing for the clip to be easily assembled, while being effective for preventing the workpiece held from sliding and preventing the two jaw parts of the clip to move one with respect to the other.

To this respect, the double-mouthed clip according to the invention is characterized in that each of the identical jaw parts thereof has a central saw-toothed portion so that when assembled and urged together by urging means the teeth of one jaw part mesh with the teeth of the other jaw part and when either end of the clip is pressed together, the teeth act as a pivot causing the other end to open in order to act as toothed jaws to grip the workpiece to be held.

For a fuller understanding of the invention, reference is made to the following description, taken in connection with the accompanying drawings, in which:

Figure No 1 shows a side longitudinal elevation of the clip.

Figure No 2 shows a frontal view of the clip teeth.

Figure No 3 shows a view of the attached symmetrical pieces.

Figure No 4 shows a side view of the elastomer binding them.

Figure No 5 shows an elevation of the whole piece completely assembled.

Figure No 6 shows a rear view and an elevation of the symmetrical pieces adapted for use.

Figure No 7 shows an alternative arrangement of the clip which has been invented with a metal spring.

Figure No 8 shows the above-mentioned metal spring.

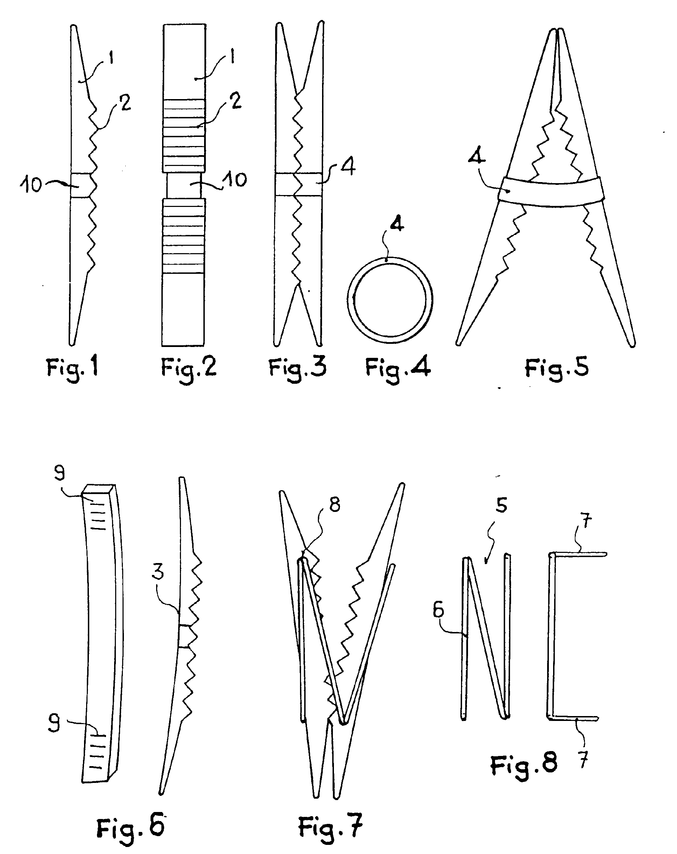

As shown in figures 1 and 2 in a simplified construction of the invention, the device consists of two strips (1) dented in the central area of one side, and wedge-shaped in both ends, so that starting from the teeth joint (2), a space opens gradually that, afterwards, when pressing any end, makes possible a lever effect and therefore the rest of the teeth of the device open to act as alligator mouth shaped crimp jaws.

So that the user can use the clip to grip more easily, the external surface opposite to the dented area can have a slight concavity (3) (Fig.6) with parallel grooves (9) near its ends.

To ensure that the jaw parts (1) of the clip are held together with a sufficient pressure to grip objects, the jaw parts are held together by an elastomer band (4) fitting into a grooved area (10) in the center of the jaw parts.

Therefore, and according to the system described above, a movement is generated that allows the device to act as a clip and at the same time as a lever at both ends.

Although the device has been described as equipped with an elastomer that in principle can be made out of rubber with specific physical and mechanical properties that make it suitable to be used for this device, an alternative arrangement is also feasible with the basic parts (Fig. 7 and 8).

The difference would consist in the use of a metal spring (5) instead of a rubber one.

The metal spring to be fitted in the above-mentioned parts consists of a Z-shaped steel wire (6) with parallel extensions (7) perpendicular to the plane in its ends an elbow, so that the elbow extensions get into the holes (8) made in the clip sides and the end extensions rest on the external area opposite to the teeth, with which a double swinging spring effect is achieved for both ends, acting both as a mouth and as a lever.

Now that the nature of the invention has been sufficiently described and an example of the practical construction of the invention has been given, we only need to add that in the assembly and parts described above it is possible to introduce changes in material, shape and arrangement of the elements, provided that such alternations do not involve substantial change of the invention.

## Claims

1. A double-mouthed clip comprising a pair of identical jaw parts (1), each of said jaw parts having a symmetrical, elongated shape with a first end, a second end and a central portion (2), wherein said jaw part (1) tapers in thickness from said central portion (2) to said first end and second end; and further comprising means (4; 5) for urging said jaw parts (1) together so that when either end of the clip is pressed together, the other end is open in order to grip an object to be held, characterized in that the central portion (2) is saw-toothed, said urging means (4 ; 5) urges the jaw parts together so that the teeth of one jaw part mesh with the teeth of the other jaw part and in that, when either end of the clip is pressed together, the teeth act as a pivot causing the other end to open in order to act as toothed jaws to grip said object to be held.

2. The double-mouthed clip according to claim 1, characterized in that each of said jaw parts is substantially linear.

3. The double-mouthed clip according to claim 1, characterized in that each of said jaw parts is curved.

4. The double-mouthed clip according to claim 1,characterized in that said urging means (4) is an elastomeric ring.

5. The double-mouthed clip according to claim 4, characterized in that each of said jaw parts (1) has an external centrally-located slot into which said elastomeric ring (4) fits.

6. The double-mouthed clip according to claim 1, characterized in that said urging means is a spring (5).

7. The double-mouthed clip according to claim 6, characterized in that said spring (5) consists of a Z-shaped spring steel wire (6) with parallel extensions (7) perpendicular to the spring body and including extensions from the Z-shaped spring steel wire (6) fitting into holes (8) made in the jaw part sides and extensions resting on the external area of the jaw parts (1) opposite to the teeth (2).

8. The double-mouthed clip according to claim 3, characterized in that the external surface (3) of each jaw part opposite to the central saw-toothed portion (2) has parallel grooves (9) near the ends of the jaw parts (1).

## Patentansprüche

1. Klammer mit zweifacher Öffnung, mit einem Paar von identischen Klemmteilen (1), wovon jedes eine symmetrische, langgestreckte Form mit einem ersten Ende, einem zweiten Ende und einem Mittelbereich (2) besitzt, wobei sich das Klemmteil (1) hinsichtlich seiner Dicke vom Mittelbereich (2) zum ersten Ende und zum zweiten Ende hin verjüngt; und ferner mit Einrichtungen (4; 5), um die Klemmteile (1) zusammenzupressen, so daß dann, wenn irgendeines der Enden der Klammer zusammengedrückt wird, das andere Ende geöffnet wird, um einen zu haltenden Gagenstand zu greifen, dadurch gekennzeichnet, daß der Mittelbereich (2) eine Sägezahnstruktur aufweist, wobei die Preßeinrichtung (4; 5) die Klemmteile so zusammenpreßt, daß die Zähne eines Klemmteils mit den Zähnen des anderen Klemmteils in Eingriff sind, und daß dann, wenn irgendeines der Enden der Klammer zusammengedrückt wird, die Zähne als Drehgelenk wirken, wodurch ein Öffnen des anderen Endes verursacht wird, damit die Klemmteile als gezahnte Klemmen wirken, um den zu haltenden Gegenstand zu greifen.

2. Klammer mit zweifacher Öffnung gemäß Anspruch 1, dadurch gekennzeichnet, daß jedes der Klemmteile im wesentlichen geradlinig ist.

3. Klammer mit zweifacher Öffnung gemäß Anspruch 1, dadurch gekennzeichnet, daß jedes der Klemmteile gekrümmt ist.

4. Klammer mit zweifacher Öffnung gemäß Anspruch 1, dadurch gekennzeichnet, daß die Preßeinrichtung (4) ein Elastomer-Ring ist.

5. Klammer mit zweifacher Öffnung gemäß Anspruch 4, dadurch gekennzeichnet, daß jedes der Klemmteile (1) einen außenseitigen, mittigen Schlitz besitzt, in den der Elastomer-Ring (4) eingepaßt ist.

6. Klammer mit zweifacher Öffnung gemäß Anspruch 1, dadurch gekennzeichnet, daß die Preßeinrichtung eine Feder (5) ist.

7. Klammer mit zweifacher Öffnung gemäß Anspruch 6, dadurch gekennzeichnet, daß die Feder (5) aus einem Z-förmigen Federstahldraht (6) mit parallelen Verlängerungen (7) besteht, die zum Federkörper senkrecht sind und Verlängerungen des Z-förmigen Federstahldrahtes (6), die in den Seiten der Klemmteile ausgebildete Löcher (8) eingepaßt sind, sowie Verlängerungen umfassen, die auf der jeweiligen Außenfläche der Klemmteile (1), die den Zähnen (2) gegenüberliegen, aufruhen.

8. Klammer mit zweifacher Öffnung gemäß Anspruch 3, dadurch gekennzeichnet, daß die Außenfläche (3) eines jeden Klemmteils, die dem mittigen Sägezahnbereich (2) gegenüberliegt, in der Nähe der Enden der Klemmteile (1) parallele Rillen (9) besitzt.

## Revendications

1. Pince à ouverture double comprenant une paire de parties de mâchoire identiques, chacune desdites parties de mâchoire ayant une forme allongée symétrique avec une première extrémité, une deuxième extrémité et une partie centrale (2), dans laquelle l'épaisseur de ladite partie de mâchoire (1) diminue depuis ladite partie centrale (2) à ladite première extrémité et deuxième extrémité; et comprenant en outre des moyens (4; 5) pour solliciter lesdites parties de mâchoire (1) l'une contre l'autre de sorte que lorsque l'une desdites extrémités de la pince est comprimée, l'autre extrémité est ouverte pour saisir un objet à tenir, caractérisée en ce que la partie centrale (2) est en dents de scie, ledit moyen de sollicitation (4; 5) sollicite les parties de mâchoire l'une contre l'autre de sorte que les dents d'une partie de mâchoire engrènent avec les dents de l'autre partie de mâchoire et en ce que, lorsque l'une quelconque des extrémités de la pince est comprimée, les dents agissent comme un pivot en provoquant l'ouverture de l'autre extrémité afin d'agir comme mâchoires dentées pour saisir ledit objet à tenir.

2. Pince à ouverture double selon la revendication 1, caractérisée en ce que chacune desdites parties de mâchoire est sensiblement linéaire.

3. Pince à ouverture double selon la revendication 1, caractérisée en ce que chacune desdites parties de mâchoire est courbée.

4. Pince à ouverture double selon la revendication 1, caractérisée en ce que ledit moyen de sollicitation (4) est un bague en élastomère.

5. Pince à ouverture double selon la revendication 4, caractérisée en ce que chacune desdites parties de mâchoire (1) présente une fente externe localisée au centre dans laquelle s'adapte ladite bague en élastomère (4).

6. Pince à ouverture double selon la revendication 1, caractérisée en ce que ledit moyen de sollicitation est un ressort (5).

7. Pince à ouverture double selon la revendication 6, caractérisée en ce que ledit ressort (5) est constitué d'un fil d'acier en forme de (Z) formant ressort (6) avec des extensions parallèles (7) perpendiculaires au corps de pince et incluant des extensions du fil d'acier en forme de Z formant ressort (6) s'adaptant dans des trous (8) pratiqués dans les côtés des parties de mâchoire et des extensions restant sur la zone externe des parties de mâchoire (1) opposées aux dents (2).

8. Pince à ouverture double selon la revendication 3, caractérisée en ce que la surface externe (3) de chaque partie de mâchoire opposée à la partie centrale (2) en dents de scie présente des rainures parallèles (9) à proximité des extrémités des parties de mâchoire (1).
